**Europäisches Patentamt**

**European Patent Office**

**Office européen des brevets**

(19)

(11) Publication number : **0 498 593 A2**

## EUROPEAN PATENT APPLICATION

(12)

(21) Application number : **92300890.8**

(22) Date of filing : **03.02.92**

(51) Int. Cl.⁵ : **H04M 3/46**

(30) Priority : **08.02.91 US 652704**

(43) Date of publication of application :
**12.08.92 Bulletin 92/33**

(84) Designated Contracting States :
**ES GB IT NL**

(71) Applicant : **AMERICAN TELEPHONE AND
TELEGRAPH COMPANY
550 Madison Avenue
New York, NY 10022 (US)**

(72) Inventor : **Krishnan, Manivakkam P.
7 Stoecker Road
Holmdel, New Jersey 07733 (US)**
Inventor : **Ramkumar, Vasant C.
1215 Hidden Springs Drive
Naperville, Illinois 60540 (US)**

(74) Representative : **Watts, Christopher Malcolm
Kelway, Dr. et al
AT&T (UK) LTD. AT&T Intellectual Property
Division 5 Mornington Road
Woodford Green Essex IG8 OTU (GB)**

(54) **Call forwarding system.**

(57) A call-forwarding system interfaces with a plurality of telephones (104-107,109). A customer can set up a list of destination numbers at a service control processor (103), each destination number having a weight x, which is the maximum permitted number of rings for that number. When a call is placed to a certain number and the call is not answered within x rings or the number is busy, the call is forwarded to the next number on the list, and so on until the call is answered or the end of the list is reached. A number may be the same as one of the earlier numbers, but with a different x, so as to activate an answering machine. The call routing information may depend on the calling number if this is available. A recorded message (108) may be used to inform a caller that the call is being forwarded.

FIG. 1

## Technical Field

This invention relates generally to a telephone network switching system, and more particularly, to an improved system for selectively forwarding a telephone call to other locations.

## Description of the Prior Art

Call forwarding in telecommunications systems is generally implemented via an "on premises" switch. In a typical call forwarding system, a telephone can be programmed to forward calls to a particular forwarding number if the called number is busy or if it is not answered within a predetermined number of rings provided the telephone to which the call is to be forwarded and the telephone called are coupled to the same premises switch. For example, a telephone subscriber may direct the on premises switch to forward all received calls to a telephone at another location. Thus, when a subscriber is not available to answer a call, the call is immediately rerouted or forwarded to another telephone for answering. It is to be noted, however, that a call cannot be forwarded from a telephone coupled to first or premises switch to a telephone coupled to a second on premises switch located at another central office. Alternatively, the telephone network on premises switch can be programmed to permit the called telephone to ring a predetermined number of times before the call is forwarded to a telephone at another location.

The call forwarding system described above suffers from inflexibility as limited number of options can be set on any called telephone. For example, a call is forwarded without ringing the called telephone and/or a call is normally forwarded if the called telephone is "busy" or does "not answer".

Clearly, a more flexible system which can provide a telephone subscriber with greater flexibility is needed to satisfy the needs of the users

## Summary of the Invention

The above problem is overcome and a technical advance is achieved in accordance with the present invention which relates to a flexible, call forwarding and rerouting system which can be programmed by a user. In accordance with the principles of the invention, calls cannot only be forwarded from the called telephone to a plurality of telephone, in sequence, but, as the call is forwarded from one telephone to another, the number of rings at each telephone can be determined by the user. In this manner, the call searches for the called party.

In a further embodiment, the system can route a call from a telephone coupled to an on premises switch located at one central office to a telephone coupled to an on premises switch located at another central office. In another embodiment, the system can be programmed to route a call which remains unanswered after having been forwarded to vinous telephones to an answering machine which can be connected to either the called telephone or to a different telephone which may have been rung previously. In still another embodiment, priority routing procedures can be established for calls received from specific telephones. For example, in telephone systems such as Intelligent Networks/ Integrated Services Defined Network, (IN/ISDN), where the calling number can be identified by the called telephone before the called telephone is answered, special routing procedures can be established for specific calls.

## Brief Description of the Drawing

Fig. 1 is a block diagram of a portion of a typical telephone switching system; and
Fig. 2 is a flow diagram of an exemplary protocol in accordance with the principles of the invention.

## Detailed Description

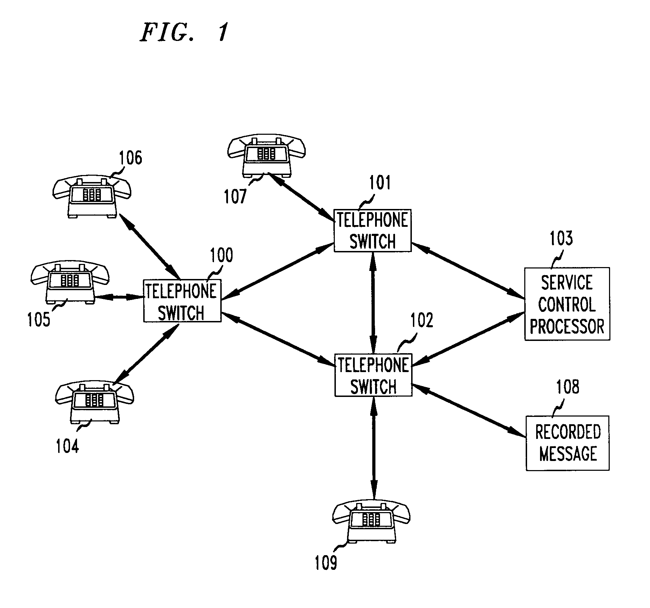

FIG. 1 illustrates a block diagram of a portion of a typical telephone switching system. The arrangement of FIG. 1 comprises "on premises" telephone switches 100-102 also identified as "on premises" switches which are normally located at various central offices, Service Control Processor (SCP) 103, recorded message 108, and telephones 104, 105, 106, 107 and 109. The three exemplary switches 100-102 shown are intended to be part of any large switching network and may be any of the many types of switches which are well known in the telecommunications industry where each on premises switch can be located at a different central office. All of the call forwarding instructions required to implement the invention may be most conveniently programmed into Service Control Processor (SCP) 103, a device which is known in telephone switching but which may also be implemented using any suitable computer. The service central processor can be located at a central office or remove from any one central office. However, regardless of where the service central processor is located, it is coupled to a plurality of on premises switches. As is illustrated in FIG. 1, the service central processor 103 is coupled to operate on premises switches 100, 101, and 102, even when each of the on premises switches is located at a discrete central office. The call forwarding instructions required to implement the invention can be most conveniently programmed into the Service Control Processor (SCP) 103 and may be updated and adapted via software without requiring the actual switching software to be changed.

In operation, incoming calls arrive at any of the switches 100-102 for routing to an appropriate telephone. Each switch checks the called number and determines if such number requires access to the SCP 103 for routing instructions, or if the call can be routed normally without any instructions. If SCP access is required, the SCP is contacted by the switch, which fowards the called number and the calling number, if available, to the SCP. The SCP then provides the on premises switch with all of the instructions for call routing and the call is routed by the proper one of switches 100- 102. In some instances the call may be routed to telephones coupled to two or more on premises switches. For example, a call from telephone 107 to telephone 106 can be forwarded to telephone 105, then 109, then 104 and then back to telephone 105. The SCP may be required to issue instructions several times during one call in order to route that call to more than one destination if one or more telephones to which the call is routed is busy or is not answered. The details of the interaction between the SCP and the switches, and a more detailed description of the internal operation of the SCP appears below.

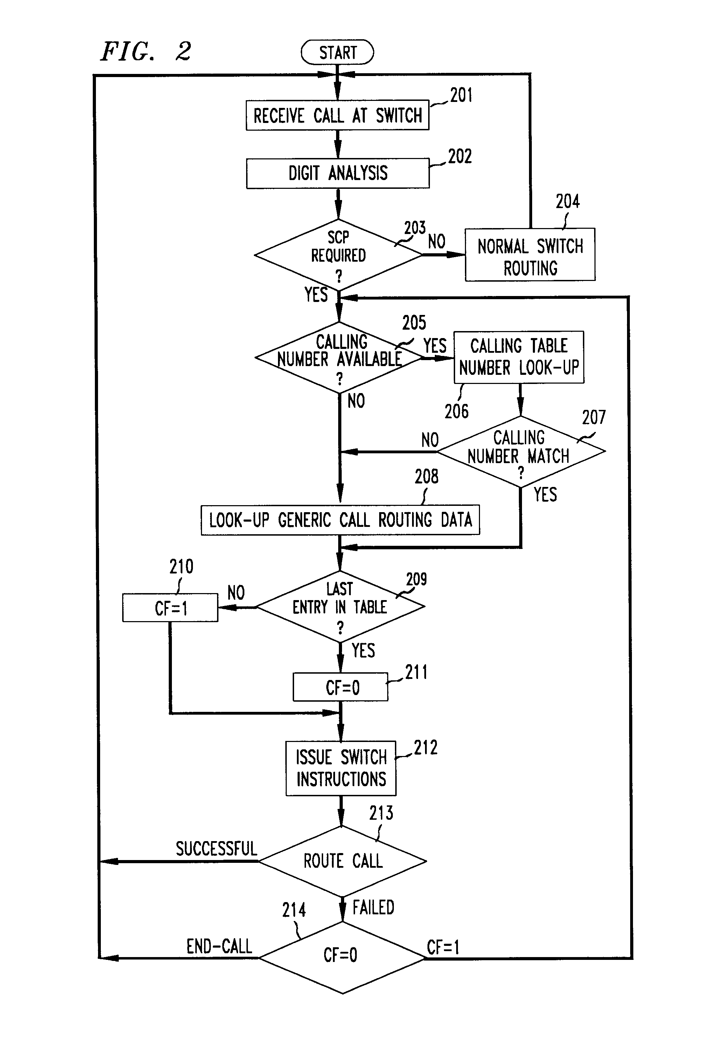

FIG. 2 shows a flow diagram of an exemplary protocol which may be implemented by the SCP in order to facilitate the required interaction with any of the switches of the telecommunications network in accordance with the principles of the invention. From the description hereafter, it will become apparent which of the operational blocks and decision points should be implemented in the SCP, and which should be implemented in the switches. The algorithm is entered at start block 200 and control is immediately transferred to operational block 201 upon receipt of an incoming call by the switch. Operational block 201 obtains the called number and, if possible, the calling number, from the incoming call, transfers these parameters to operational block 202, and passes control to operational block 202. Operational block 202 performs digit analysis in order to determine which number is being dialed, and/or the actual desired party being called. Control is then passed to branch point 203, which determines if the call requires SCP assistance, or if alternatively, it is a standard call which the switch can route based upon the incoming called number. If the latter is true, the switch simply routes the call as indicated by operational block 204, and returns to operational block 201 to receive a next call as indicated in FIG. 2.

If the incoming number is subject to possible call forwarding, then branch point 203, implemented in the switch, will transfer control with the appropriate parameters to branch point 205 in the SCP for determination as to whether or not a calling number is available for use in call routing and forwarding. In systems such as ISDN, it is likely that the calling number will be available in addition to the called number. If the calling number is available, then control will be passed to operational block 206, which will utilize the SCP database to determine the call routing information that may be dependent upon the calling number, the called number, or both.

If the calling number is located within the database of the SCP, information as to where to route the call, how many times the telephone is to be rung, or if the call should be routed at all will be taken by operational block 206 from the database entry associated with the calling number. If the calling number is not in the database, then control is transferred from operational block 206 through operational block 207 to operational block 208 which ascertains the call routing information based upon the called number as would be the case if no calling number were available. In either case, any available call routing information is then transferred to branch point 209 for determination as to whether of not the call forwarding number just obtained from the database is the last telephone number to which the call should be routed, or if upon a busy/no answer condition, the database should be rechecked and the call once again rerouted.

Whether or not the last number has been reached is indicated by a call forward (CF) bit being set, as indicated in operational blocks 210 and 211. A CF bit of 1 means that other telephone numbers are to be interrogated. A CF bit of 0 means that the call is not to be forwarded. After the appropriate one of operational blocks 210 or 211 has been executed and consequently, the CF bit has been appropriately set, the SCP transfers instructions to operational block 212 for communications with the switch.

Operational block 212 assembles a packet, for example, which contains the number to which the switch should route the incoming call, the number of times the telephone should ring, and the CF bit. All of this information is sent to operational block 213 in the switch, and the call is routed.

If the call is successfully routed, i.e. is answered, then control is returned to operational block 201 for receipt of a new call. If the call is not successfully routed; i.e. a busy or no answer condition is encountered, then branch point 214 is invoked as shown in FIG. 2. Branch point 214 ascertains the state of the CF bit, thereby determining if the SCP should be rechecked for further routing. If the CF bit indicates further checking, then control is passed to operational block 205 for repeated SCP processing. If the CF bit indicates that all of the numbers to which that call should be forwarded have been checked, then the call simply ends unsuccessfully and control is returned to operational block 201 for receipt of the next call. It should be noted that if further SCP checking is required, the telephone to which the call was most recently routed unsuccessfully may continue to ring, and these additional rings should be accounted for in determining how many rings the caller should hear before his call is rerouted.

While the above describes an exemplary embodiment of the invention, there are many other variations of the invention which can be constructed by those of ordinary skill in the art. One such variation involves sending all of the numbers to which a call may be routed to the switch the first time the SCP is queried, so that if one or more of the numbers result in a busy or no answer condition, the SCP need not be contacted again. Rather, the switch would have an entire list of numbers to which the call should be forwarded until one is found that is successful. While this would tend to make the protocol between the switch and the SCP simpler, it does so at the cost of requiring the software in the switch itself to implement a considerable portion of the call forwarding functions. This may be undesirable, as it requires the switching software to be updated each rime the call forwarding software is altered.

Another variation involves playing some type of recorded message while the call is being rerouted so that the calling party is told that the network is currently being searched for the called party, rather than simply leaving the calling party waiting with no answer. Such a recorded message can be implemented with simple additional hardware connected to the switches, as shown in FIG. 1 and denoted as a recorded message storer/player. This can be done in a straightforward manner using a system similar to those in currently in use to play recorded messages while a customer is on hold.

## Claims

1. A call forwarding system adapted to interface with a plurality of telephones comprising:
   a first on premises switch located at a first central office;
   means coupled to said on premises switch to cause a first telephone to ring a predetermined number of times, said second telephone to ring a predetermined number of times if the first telephone indicates a busy or no answer condition, and said third telephone to ring a predetermined number of times if the second telephone indicates a busy or no answer condition.

2. The system of claim 1 wherein said means further comprises:
   means to identify the telephone number of a calling telephone, and
   means for selecting which of said first, second or third telephones are to ring and the number of rimes each telephone is to ring based upon said calling telephone number.

3. The system of claim 2 further comprising:
   means coupled to said on premises switch for recording an audible message and for transmitting said audible message to a caller.

4. The system of claim 1 or 2 wherein said means further comprises means to enable a telephone to be polled twice during a call forwarding sequence.

5. The system of claim 1 wherein said means further comprises means to select the number of rimes each telephone is allowed to ring during a call forwarding sequence.

6. The system of claim 5 wherein said means to select the number of rimes each telephone is allowed to ring further comprises means to enable each telephone to have a different number of rings.

7. The system of claim 5 wherein said means further comprises means to enable a single telephone to be polled twice during a call forwarding sequence.

8. The system of claim 1 further comprising a second on premises switch located at a second central office coupled to said means to enable a call to be forwarded to telephones coupled to said first and second on premises switches.

FIG. 1

FIG. 2

```
                          ( START )

              ┌──────────────────────────┐
              │  RECEIVE CALL AT SWITCH   │── 201
              └──────────────────────────┘
                          │
              ┌──────────────────────────┐
              │      DIGIT ANALYSIS       │── 202
              └──────────────────────────┘
                          │
                   ╱─────────╲            ┌──────────────────┐
                  ╱    SCP     ╲  203  NO  │  NORMAL SWITCH   │── 204
                 ╱  REQUIRED    ╲─────────→│     ROUTING      │
                  ╲     ?      ╱            └──────────────────┘
                   ╲─────────╱
                     YES
                      │
                   ╱─────────╲   205        ┌──────────────────┐
                  ╱  CALLING   ╲  YES        │  CALLING TABLE   │
                 ╱ NUMBER AVAILABLE ╲───────→│ NUMBER LOOK-UP   │
                  ╲     ?      ╱             └──────────────────┘
                   ╲─────────╱   206              │
                     NO                      ╱─────────╲   207
                      │              NO      ╱  CALLING  ╲
                      │         ←───────────╱  NUMBER MATCH ╲
                      │                      ╲     ?      ╱
              ┌──────────────────────────┐    ╲─────────╱
              │ LOOK-UP GENERIC CALL      │── 208   YES
              │      ROUTING DATA         │
              └──────────────────────────┘
                      │
    210               │
  ┌──────┐    NO   ╱─────────╲   209
  │ CF=1 │←───────╱   LAST     ╲
  └──────┘         ╲ ENTRY IN TABLE ╱
      │             ╲     ?      ╱
      │              ╲─────────╱
      │                 YES
      │              ┌────────┐
      │              │  CF=0  │── 211
      │              └────────┘
      └─────────────────→│
              ┌──────────────────┐
              │  ISSUE SWITCH    │── 212
              │  INSTRUCTIONS    │
              └──────────────────┘
                      │
                      │        213
  SUCCESSFUL      ╱─────────╲
  ←──────────────╱  ROUTE CALL ╲
                  ╲─────────╱
                    FAILED
    214               │
  END-CALL       ╱─────────╲       CF=1
  ←─────────────╱   CF=0     ╲──────────→
                  ╲─────────╱
```

6